(19) Europäisches Patentamt
European Patent Office
Office européen des brevets

(11) EP 3 257 621 B1

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(51) Int Cl.:
***B23Q 1/48*** *(2006.01)*      ***B23Q 1/62*** *(2006.01)*
***G02B 21/26*** *(2006.01)*      ***G01B 1/00*** *(2006.01)*

(21) Anmeldenummer: **16001333.0**

(22) Anmeldetag: **13.06.2016**

(54) **VORRICHTUNG ZUR VARIABLEN UND GEFÜHRTEN POSITIONIERUNG EINES ZU MESSENDEN UND/ODER ZU BEARBEITENDEN OBJEKTES ODER EINES OBJEKTTRÄGERS**

DEVICE FOR VARIABLE AND GUIDED POSITIONING OF AN OBJECT OR AN OBJECT HOLDER TO BE MEASURED AND/OR MACHINED

DISPOSITIF DE POSITIONNEMENT VARIABLE ET GUIDE D'UN OBJET OU D'UN PORTE-OBJET A USINER ET/OU A MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.12.2017 Patentblatt 2017/51**

(73) Patentinhaber: **Eitel, Rudolf**
**96178 Pommersfelden (DE)**

(72) Erfinder: **EITEL, Wolfgang**
**91315 Höchstadt a.d. Aisch (DE)**

(74) Vertreter: **Küchler, Stefan**
**Patentanwalt**
**Färberstrasse 20**
**90402 Nürnberg (DE)**

(56) Entgegenhaltungen:
**WO-A1-93/25928          JP-A- S5 837 615**
**US-A1- 2010 250 004**

**Beschreibung**

Die Erfindung richtet sich auf eine Vorrichtung zur variablen und/oder geführten Positionierung eines zu messenden und/oder zu bearbeitenden Objektes oder eines Objektträgers, mit einer Grundplatte, einem ersten, auf der Grundplatte in einer ersten horizontalen Richtung geführt verfahrbaren, ersten Schlitten und einem auf dem ersten Schlitten in einer zu der ersten Richtung lotrechten, zweiten horizontalen Richtung verfahrbaren zweiten Schlitten. Die Erfindung eignet sich dabei u.a. besonders für den Einsatz im Rahmen von berührungslosen Mess- oder Bearbeitungsverfahren wie Röntgen- oder Computertomographie-Untersuchungen oder Laserschneiden, und/oder für solche Verfahren, mit denen ein Objekt unter Einwirkung von Kräften untersucht und/oder bearbeitet wird, wie beispielsweise Abtastungen oder Modellbau. Dabei erlaubt insbesondere die mit der Erfindung erreichbare Positionierung eine Wiederholgenauigkeit bei dem wiederholten Aufspannen eines Bearbeitungs- oder Messobjekts die Durchführung von Referenz- und Vergleichsmessungen, auch bei anderen und unterschiedlichen Gerätschaften, denn dann können beispielsweise mehrere Messaufnahmen unter gleichen Positionsbedingungen verglichen, übereinander gelegt oder projiziert werden, um sofort Übereinstimmungen und Abweichungen erkennen zu können.

Im Stand der Technik sind sogenannte Kreuztische bekannt mit zwei rechtwinklig zueinander verfahrbaren, bspw. rahmenförmig aufgebauten Schlitten, wobei an dem obersten Schlitten Klemmbacken vorgesehen sind oder sein können, um ein Werkstück einzuspannen. Üblicherweise sind die Schlitten an Führungsschienen und/oder mittels Führungsstangen geführt verfahrbar, wobei diese Führungsschienen oder Führungsstangen nicht nur unter- oder übergriffen werden, sondern auch derart umgriffen werden, dass der geführte Schlitten nicht durch unvorhergesehene Kräfte von der Führungseinrichtung abgehoben werden. Dies kann beispielsweise dadurch realisiert sein, dass Führungsschienen ein sog. Schwalbenschwanzprofil aufweisen, das von der Oberseite und teilweise auch von der Unterseite umgriffen wird, oder dadurch, dass eine Führungsstange von einer Öffnung mit einem geschlossenen Rand umgriffen wird. Dieser soeben erwähnte Formschluss bedingt eine nicht unerhebliche Bauhöhe in einer Richtung quer zur bevorzugten Führungsrichtung. Ferner ist durch eine solche Konstruktion zwar einerseits eine formschlüssige Verbindung geschaffen, d.h., durch die Form der ineinander verzahnten Elemente wird eine Lösebewegung ausgeschlossen; andererseits ist eine Demontage der verschiedenen Bestandteile einer solchen Führungseinrichtung entweder gar nicht möglich oder erfordert ein präzises, endseitiges "Einfädeln" des umgriffenen Teils in das umgreifende Teil. Bei handelsüblichen Kreuztischen wird der erste Schlitten durch Führungselemente auf der Grundplatte geführt und gehalten, während der zweite Schlitten durch Führungselemente auf dem ersten Schlitten geführt und von diesem gehalten wird. Der Antrieb der beiden Achsen einer solchen Konstruktion kann über motorgetriebene Kugelgewindetriebe, andere Gewindetriebe oder auch mittels Linearmotoren realisiert werden. Darüber hinaus gibt es auch die Möglichkeit, den Vorschub manuell über Kurbeln und/oder Drehgriffe zu ermöglichen. Um eine ungewollte Verschiebung solcher Schlitten zu vermeiden bzw. eine Position fixieren zu können, sind diese Schlitten mit Klemmungen und/oder antriegen versehen. Daraus resultieren hohe, klobige und schwere Anordnungen und nehmen viel Platz in Anspruch, wodurch der zur Verfügung stehende Mess- Oder Bearbeitungsraum eingeschränkt wird.

In der US-A-2010/0250004 wird eine Vorrichtung nach dem Oberbegriff des beigefügten Anspruchs 1 offenbart.

In der WO 2005/111690 A2 ist eine Kreuztischerweiterung für ein Mikroskop offenbart. Auch dort ist eine rahmenartige Bauweise der Schlitten anzutreffen, so dass ein zu betrachtendes Objekt von unten be- bzw. hinterleuchtet werden kann. Die Konstruktion mit rahmenförmigen Schlitten bedingt, dass jeder Schlitten relativ groß ausgebildet sein muss, damit ein genügend großes Fenster in der Mitte ständig offen bleibt, um Licht hindurchzulassen. Daher ist eine solche Anordnung relativ voluminös und erlaubt dennoch nur die Betrachtung kleiner Objekte, entsprechend der lichten Weite mehrerer, überlagerter Fenster innerhalb de rahmenförmigen Schlitten. Die teile können nur durch das Fenster im Zentrum betrachtet werden.

Aus den Nachteilen des beschriebenen Standes der Technik resultiert das die Erfindung initiierende Problem, eine gattungsgemäße Vorrichtung derart weiterzubilden, dass damit auch größere, ggf. auch höhere Objekte betrachtet, untersucht und/oder bearbeitet werden können. Auch soll/kann die technisch bedingte Bauhöhe der Anordnung möglichst gering sein, um den zur Verfügung stehenden Mess- oder Bearbeitungsbereich so wenig als möglich einzuschränken; und eine Demontage der Vorrichtung, aber ggf. auch eine anschließende Montage, soll/kann ohne größere Behinderungen möglich sein. Schließlich soll die Führung zuverlässig arbeiten, d.h., einem versehentlichen Lösen der aneinander geführten Teile einen ausreichenden Widerstand entgegensetzen und das Positionieren nach einer Vorgabe ermöglichen, wie auch das halten/Arretieren einer einmal eingestellten Position. Vorhandene Führungen sollten sich gegenseitig nicht behindern oder beeinflusen und eine uneingeschränkte Bewegungsfreiheit der Schlitten zu ermöglichen.

Die Lösung dieses Problems gelingt durch eine Vorrichtung nach dem beigefügten Anspruch 1.

Erfindungsgemäß sind die Grundplatte und die beiden Schlitten nicht rahmenförmig aufgebaut mit je einem für Licht oder sonstige Strahlung durchdringbaren Fenster in der Mitte, sondern scheibenförmig oder plattenförmig, insbesondere ohne eine solche Fensterausnehmung in der Mitte zur Betrachtung eines Objektes. Dadurch ist einerseits mehr Platz zur Anordnung von Skalen vorhanden; andererseits wird die zulässige Verschiebung der Schlitten gegeneinander nicht durch eine Randbedingung eingeschränkt, wonach sich Fenster in der Grundplatte sowie in jedem Schlitten bei jeder Verschiebestellung überlagern sollten, um eine Hinterleuchtung eines zu betrachtenden Objekts zu erlauben. Darüber hinaus hat die Scheiben- und/oder Plattenform eine optimale Stabilität, so dass die Bauhöhe reduziert werden kann. Durch die aufeinander geschichtete Anordnung der beiden Schlitten und der Grundplatte ist jederzeit eine einfache Demontage möglich, und dank der hohen Stabilität der scheibenförmigen und/oder plattenförmigen Bestandteile der Vorrichtung lässt sich eine hochpräzise Führung realisieren. Durch wenigstens einen unmittelbaren Kontakt zwischen dem zweiten, obenauf sitzenden Schlitten und der zuunterst angeordneten Grundplatte wird eine Führung dieser beiden Teile innerhalb von zueinander parallelen Ebenen bewerkstelligt. Diese Führung wiederum stützt bei einer horizontalen Anordnung dieser Ebene(n) den oberen Schlitten unmittelbar auf der Grundplatte ab, so dass der mittlere, erste Schlitten von tragenden Kräften weitestgehend befreit ist. Aufgrunddessen müssen die an jenem angeordneten oder mit jenem zusammenwirkenden Längs-Führungen nicht für die gesamten, auflastenden Kräfte ausgelegt sein, sondern können deutlich filigraner und damit leichter und kleiner ausgeführt sein, was sich positiv auf die Herstellungskosten auswirkt. Mehr noch - die eigentlichen Längsführungen sind geschützt in dem Zwischenraum von gleichbleibender Höhe zwischen dem obersten Schlitten einerseits und der Grundplatte andererseits angeordnet und können daher weder beschädigt werden noch verschlissen. Daraus resultiert ein besonders langlebiges Produkt, obwohl damit auch beträchtliche Gewichte von Mess- oder Bearbeitungsobkjekten abgestützt werden können. Ferner kann im Rahmen eines solchen Kontaktes zwischen dem obersten Schlitten einerseits und der Grundplatte andererseits auch eine gemeinsame Arretierung vorgesehen sein, während im Stand der Technik üblicherweise zwei Arretierungen erforderlich sind, eine erste für die untere Längsführung zwischen Grundplatte und erstem Schlitten, sowie eine zweite für die Arretierung des zweiten, oberen Schlittens auf dem ersten, Schlitten. Eine kippsichere Abstützung des zweiten, oberen Schlittens auf der Grundplatte wird dabei erreicht durch mehrere Kontaktpunkte oder -bereiche zwischen dem oberen Schlitten und der Grundplatte. Diese Kontaktpunkte oder -bereiche befinden sich bevorzugt an den Unterseiten von einem oder mehreren, nach unten ragenden Füßen des zweiten Schlittens. Über diese Kontaktbereiche kann insbesondere auch eine lotrecht zur Grundplatte wirkende (Gewichts-) Kraft eines aufgespannten Teiles unmittelbar von dem oberen Schlitten in die Grundplatte des erfindungsgemäßen Kreuztischs eingeleitet werden, wird also um die Parallelführungseinrichtung zwischen dem oberen und unteren Schlitten einerseits sowie um die andere Parallelführungseinrichtung zwischen dem unteren Schlitten und der Grundplatte andererseits umgeleitet. Jene Parallelführungseinrichtungen könen daher deutlich filigraner ausgelegt werden als dies ansonsten erforderlich wäre. Sofern wenigstens drei derartige Kontaktflächen, insbesondere an den Unterseiten von Füßen, vorhanden sind, so sitzt der obere Schlitten wackelfrei auf der Grundplatte auf. In der Praxis haben sich vier Kontaktbereiche an den Unterseiten von vier Standfüßen bewährt, welche sich jeweils an den Eckpunkten eines etwa gleichseitigen Rechtecks oder eines Quadrats befinden. Solange das Zentrum einer resultierenden Gewichtskraft des oberen Schlittens samt darauf aufgespanntem Mess- oder Bearbeitungsobjekt innerhalb dieses zwischen den Füßen oder Magnetfüßen oder Vakuumfüßen aufgespannten Rechtecks oder Quadrats liegt, liegt der obere Schlitten kippsicher auf der Grundplatte auf.

Mehrere solche Kontaktpunkte sollten bspw. in einem Quadrat angeordnet sein wie die Tischbeine eines Tisches, so dass sich eine maximale, wackelfreie Stabilität ergibt wie bei einem stabilen, wackelfrei stehenden Tisch.

Zur Arretierung könnten in der Oberseite der Grundplatte ein oder mehrere sehr kleine Öffnungen vorgesehen sein, welche an eine interne Unterdruck-Quelle angeschlossen sind, so dass durch diese kleinen Öffnungen bei Bedarf und/oder Betätigung bzw. Aktivierung der Unterdruck-Quelle Luft angesaugt wird. Der Schlitten und/oder die Füße können solange über die mit Öffnungen versehene Grundplatte gleiten, bis das Vakuum eingeschaltet wird. Sobald nach der Aktivierung der Unterdruck-Quelle ein Schlitten oder ein Fuß des oberen Schlittens eine oder mehrere solche Öffnungen überdeckt, entsteht im Bereich der überdeckten Öffnungen ein Saug-Vakuum, also ein Unterdruck, während auf der Oberseite des betreffenden Schlittens dagegen der normale Atmosphärendruck lastet. Der Effekt ist ein erhöhter Anpressdruck zwischen den aneinander festgesaugten Elementen. Dies wiederum fürht zu einer erhöhten Reibung, welche für eine zuverlässige Aretierung der aneinander liegenden Elemente verantwortlich ist. Diese Arretierung ist so stark, dass selbst bei einer Bearbeitung eines eingespannten Werkstückes mit einem spanenden Werkzeug keine Verschiebung zwischen den aneinander festgesaugten Elementen des Kreuztischs zu befürchten ist. Eine solche Saugwirkung kann andererseits sogar noch weiter gesteigert werden, indem beispielsweise eine einen oder mererere Füße umlaufende Dichtung vorgesehen ist, so dass die gesamte Unterseite eines oben auf sitzenden Schlittens innerhalb eines rundum laufenden Dichtungsrings im Zusammenhang mit den oben erwähnten Saugöffnungen eine vorzugsweise weiter gesteigerte Arretierungskraft entfalten kann.

Andererseits oder auch kumulativ dazu können in einem oder mehreren Füßen des oberen Schlittens auch jeweils ein oder mehrere Magnete angeordnet sein. Indem solchermaßen oder auf andere Weise der zweite Schlitten einerseits und die Grundplatte andererseits durch Magnetkraft zusammengehalten werden, lässt sich einerseits die Bauhöhe reduzieren; andererseits versucht eine Magnetkraft beständig, die betreffenden Elemente, bspw. eine Grundplatte und einen oberen Schlitten, flächig aneinanderzupressen, wodurch die Befestigung, Führung und Zentrierung unterstützt bzw. ermöglicht wird. Dabei sind Permanentmagnete, insbesondere Topfmagnete, zu bevorzugen, da jene keine Hilfsenergie benötigen und ihre Anziehungskraft über lange Zeiträume von vielen Jahren hinweg kaum nachlässt. Die Haltekraft lotrecht zur Berührungsebene als auch die für eine Verschiebung tangential zur Berührungsebene aufzubringende Verschiebekraft können mit Hilfe von unterschiedlich starken Magneten eingestellt werden.

Es hat sich als günstig erwiesen, dass der erste Schlitten und/oder der zweite Schlitten jeweils eine geschlossene Ober- und/oder Unterseite aufweist (-en), allenfalls unterbrochen von Durchgangsbohrungen und/oder (Führungs-) Nuten zur Aufnahme von Führungsstiften oder zur Fixierung von Führungsleisten, Führungsösen od. dgl., welche kleiner sein sollten als der / die Stützfüsse. Eben diese geschlossene Ober- und/oder Unterseite erlaubt es, die Führungen in oder nahe dem Zentrum des betreffenden Schlittens anzuordnen. Daher können Elemente der Führungseinrichtung wie Durchgangsbohrungen und/oder (Führungs-) Nuten zur Aufnahme von Führungsstiften oder zur Fixierung einer Führungsöse oder einer Führungsleiste ausnahmsweise im Zentrum einer solchen geschlossenen Ober- und/oder Unterseite eines Schlittens angeordnet sein. Andererseits ist eine derart weitgehend geschlossene Oberseite der Grundplatte wichtig, damit der obere Schlitten möglichst jede Position innerhalb seines zulässigen Verstellbereichs anfahren kann.

Bevorzugt bestehen die Grundplatte und/oder der erste Schlitten und/oder der zweite Schlitten aus einem für Licht nicht oder kaum durchdringbaren Material wie Metall, insbesondere Aluminium, oder undurchsichtiger Kunststoff, etc. Dadurch erhöht sich einerseits die Stabilität der betreffenden Teile; darüber hinaus hat Metall weitere vorteilhafte Eigenschaften. Beispielsweie kann es magnetisch ausgebildet sein, insbesondere ferromagnetisch, und kann dann dazu beitragen, magnetische Feldlinien auf kurzem Wege sowie mit einem geringen magnetischen Widerstand zu führen.

Die Erfindung sieht weiterhin vor, dass eine oder mehrere Parallelführungen wenigstens ein langgestrecktes Führungselement umfassen, insbesondere eine Nut oder eine Stange. Diesem obliegt es, ein daran verschiebbares Führungselement eines Schlittens oder der Grundplatte nur in einer einzigen Richtung zu führen. Üblicherweise ist für eine präzise Führung eine Hinterschneidung erforderlich, bspw. dergestalt, dass ein langgestrecktes Führungselement wie bspw. eine Stange von einem anderen, bspw. ringförmigen Element umgriffen wird. Im Rahmen der vorliegenden Erfindung ist dies jedoch nicht notwendig. Vielmehr ist auch eine Nut mit ebenen, zueinander parallelen Flanken als langgestrecktes Führungselement geeignet.

Weitere Vorteile ergeben sich dadurch, dass wenigstens ein langgestrecktes Führungselement auf der Oberseite der Grundplatte und/oder auf der Oberseite der ersten Platte angeordnet ist. Damit sind sie dem jeweils darüber angeordneten Element zugewandt und stehen für eine führende Kontaktaufnahme zur Verfügung.

Die Erfindung lässt sich dahingehend weiterbilden, dass eine oder mehrere Parallelführungen wenigstens ein in ein langgestrecktes Führungselement eingreifendes oder jenes umgreifendes Element umfassen, insbesondere einen Führungsstift oder eine Führungsöse oder ein Führungsprofil oder eine Führungsleiste. Jenes erfährt an oder in dem langgestreckten Führungselement eine seitliche Führung, wodurch seine Beweglichkeit entsprechend eingeschränkt wird. Vorzugsweise gibt es jeweils wenigstens zwei solche geführte Elemente, welche in der zugelassenen Verschieberichtung gegeneinander versetzt angeordnet sind, um auch eine Schwenkbewegung um das geführte Element auszuschließen. Dies kann auch durch eine Führungsleiste erreicht werden, welche in ein langgestrecktes Führungselement eingreift und dort geführt ist. Solche Führungsleisten sollten nicht über den zweiten Schlitten hinausragen.

Bevorzugt ist wenigstens ein mit einem langgestreckten Führungselement zusammenwirkendes Element an der Unterseite des ersten oder zweiten Schlittens angeordnet, wo es der Oberseite der darunter liegenden Grundplatte oder des darunter liegenden Schlittens zugewandt ist, um in Kontakt mit dem dortigen, langgestreckten Führungselement zu treten.

Ein oder mehrere Magnete sollten sich an der Unterseite der zweiten und/oder ersten Platte befinden. Dort können sie mit einem darunter liegenden, schlitten- oder plattenförmien Element in Wechselwirkung treten, insbesondere mit der Grundplatte oder dem unteren Schlitten.

Die Erfindung sieht weiterhin vor, dass die Grundplatte eine größere Grundfläche aufweist als der erste oder der zweite Schlitten, und/oder als diejenige Fläche, welche die Stützfüße des zweiten Schlittens mit ihren unterseitigen Kontaktflächen überdecken bzw. aufspannen. Dies hat einerseits den Vorteil einer äußerst stabilen Auflage auf jeglichem Untergrund, sowie andererseits die Wirkung, dass eine auf der Grundplatte angeordnete Skala bei fast jeder Verschiebestellung zwischen den platten- oder schlittenförmigen Elementen sichtbar ist.

Bei herkömmlichen Kreuzführungen trägt die 1. Achse (X-Führung) die 2. Achse (Y-Führung), und auf der oberen Achse wird dann das zu messende oder zu bearbeitende Objekt platziert.

Bei der Erfindung handelt es sich um eine besondere Art eines Kreuztischs, welcher auch eine Verschiebung des oberen Teils in zwei zueinander winkligen Achsen (einer X-Achse und einer Y-Achse) erlaubt; jedoch dienen dabei diese Führungsachsen nur zur Führung in der jeweils zugelassenen "horizontalen" Verstellrichtung, d.h., innerhalb der betreffenden Plattenebene, haben dagegen keine tragende Funktion in einer Richtung lotrecht zur Plattenebene. Der oberste Schlitten greift dazu zwar in eine Führung des darunter liegenden Schlittens ein, erfährt dort jedoch bevorzugt keine Abstützung in einer Richtung lotrecht zu seiner Plattenebene; vielmehr ist der oberste Schlitten hinsichtlich dieser "vertikalen" Richtung von dem darunter liegenden Schlitten unabhängig, d.h. eigenständig, und wird in dieser Richtung statt dessen unmittelbar an der Oberseite der Grundplatte geführt, auf welcher seine Füße oder Magnetfüße einerseits tragend aufsitzen, andererseits jedenfalls durch eine hinreichend große Kraft verschiebbar sind.

Da die Führung zwischen dem oberen und dem darunter befindlichen Schlitten keine tragende Funktion haben, richtet sich der obere Schlitten infolge des Kontakts seiner Fuß- oder Magnetfuß-Unterseiten stets planparallel zu der Oberseite der Grundplatte aus und erfährt dort außerdem eine tragende Abstützung. Dieser tragende Zusammenhang ist derart stabil, dass auf einem solchen Kreuztisch trotz seiner geringen Bauhöhe auch sehr schwere und große Gegenstände abgestützt werden können, oder dass gar eine spanende Bearbeitung eines darauf aufgespannten Objekts möglich ist, insbesondere ein Bohren in einer Richtung lotrecht zur Ebene der Grundplatten-Oberseite.

Da somit sowohl eine Abstützung des obersten Schlittens auf der Grundplatte durch unmittelbaren Kontakt bzw. Formschluß als auch eine Arretierung des obersten Schlittens gegenüber der Grundplatte durch einen Reib- und/oder Magnetschluß zwischen diesen Elementen gewährleistet wird, ist eine zusätzliche Arretierung bzw. Fixierung einer an der X- und Y-Achse eingestellten Position im Normalfall nicht notwendig.

Infolgedessen können die Führungen selbst als auch eventuell vorhandene Achsantriebe sehr klein und/oder filigran ausgeführt werden, so dass der erfindungsgemäße Kreuztisch insgesamt sehr klein und leicht gehalten weden kann und insbesondere mit einer niedrigen Bauhöhe, kann jedoch andererseits mit einer großen Fläche und/oder einem großen Verschiebeweg in einer Ebene versehen werden. Dies bietet den Vorteil, dass gerade auch größere und/oder schwerere Objekt in einer Mess- und/oder Bearbeitungseinrichtung positioniert und entsprechend behandelt werden können.

Da die Führungsnut(en) in der Grundplatte in jene vertieft sind, können die tragenden (Magnet-) Füße ungehindert über jene Führungsnut(en) hinweg gleiten, wenn die Breite bzw. der Durchmesser der (Magnet-) Füße größer ist als die Breite einer Führungsnut. Damit erfährt der obere Schlitten durch die Führungsnut(en) in der Oberseite der Grundplatte keine Einschränkung seiner Verstellbewegung; er kann vielmehr an alle Positionen auf der Oberseite der Grundplatte verschoben werden, welche nicht durch eine sonstige Begrenzung der zulässigen Verschiebebewegung ausgeschlossen sind.

Von der Erfindung wird eine Ausführungsform angestrebt, wobei wenigstens ein Magnetschluß unmittelbar zwischen dem zweiten, oberen Schlitten und der Grundplatte ausgebildet wird. Dies ist besonders dann einfach realisierbar, wenn die Erstreckung der Grundplatte zumindest in einer Richtung größer ist als die betreffende horizontale Erstreckung eines Schlittens.

Die Erfindung bietet ferner die Möglichkeit, dass durch den Magnetschluss zwischen dem zweiten, oberen Schlitten und der Grundplatte alle drei Elemente, also die Grundplatte, der erste Schlitten und der zweite Schlitten, nur in der jeweils geführten Verschieberichtung verschiebbar, ansonsten jedoch unbeweglich aneinander festgelegt sind. Dadurch ist eine Gesamtbewegung des zweiten, oberen schlittens sowohl in x- als auch in y-Richtung möglich. Da der zweite obere Schlitten zusammen mit der Grundplatte den ersten, unteren Schlitten umgreift, wird dieser durch die Führungselemente in dem zwischen jenen verbleibenden Spalt geführt, auch wenn er selbst nicht über Magnete verfügt, so dass sich der konstruktive Aufwand weiter reduziert. Der erste Schlitten dient als Verbindungsglied zwischen dem zweiten Schlitten und der Grundplatte und erlaubt die geführte Verschiebung des zweiten Schlittens in x- und y-Richtung.

Erfindungsgemäß ist die Grundfläche des ersten, unteren Schlittens in zumindest einer Richtung schmäler als die Grundfläche des zweiten, oberen Schlittens. Dies führt zu einem seitlichen Überstand des oberen Schlittens gegenüber dem unteren Schlitten, und dieser Überstand bietet an seiner Unterseite Gelegenheit zur Anordnung von Magneten, welche in der Lage sind, einen Magnetschluss unmittelbar mit der Grundplatte auszubilden.

Die Erfindung empfiehlt, dass die zulässige Verschieberichtung zwischen dem ersten, unteren Schlitten und dem zweiten, oberen Schlitten lotrecht zu derjenigen Richtung orientiert ist, in welcher der erste, untere Schlitten schmäler ist als die Grundfläche des zweiten, oberen Schlittens. Dadurch ist sichergestellt, dass seitlich neben der zulässigen Verschieberichtung angeordnete Magnete nicht in Konflikt mit einer Führungseinrichtung des ersten Schlittens gelangen können.

Es bietet sich an, an der Unterseite des zweiten, oberen Schlittens wenigstens einen Magnet anzuordnen, welcher den ersten, unteren Schlitten seitlich umgreift, insbesondere an einer oder beiden von dessen schmalen Längsseiten, und/oder der eine Ausnehmung in dem ersten, unteren Schlitten durchgreift. Ein solcher Magnet schafft einen magnetischen Schluß von dem zweiten, oberen Schlitten zu der Grundplatte. Besser haben sich jedoch mehrere Magnete erwiesen, vorzugsweise wenigstens drei oder besser vier, welche sodann in einem Viereck angeordnet sein können und den oberen Schlitten wackelfrei auf der Grundplatte abstützen können.

Die Errfindung empfiehlt, die horizontale Erstreckung der Magnete und/oder Füße an dem oberen Schlitten wenigstens größer auszulegen als die Breite einer Führungsnut an der Grundplatte, damit die Magnete oder Füße problemlos über jene hinweg gleiten können, insbesondere ohne zu verhaken.

Ferner kann es der Lehre der Erfindung entsprechen, dass die Stärke des Überstands der Magnete und/oder Füße an der Unterseite des zweiten Schlittens gegenüber dessen Unterseite etwa der Stärke des Korpus des ersten Schlittens entsprechen kann. Demzufolge ist der lichte Abstand zwischen der Unterseite des zweiten, oberen Schlittens und der Grundplatte möglichst exakt auf die Stärke des ersten, unteren Schlittens abgestellt, um eine reibungslose Führung zu gewährleisten.

Eine andere Methode zur Fixierung des oberen Schlittens an der Grundplatte als mit Magneten ist die Verbindung der Füße mit der Grundplatte durch einen Unterdruck oder durch ein (lokales) Vakuum zwischen den Füßen und der Grundplatte. Ein solcher Unterdruck oder Vakuum kann entweder durch Ausgestaltung der Grundplatte als Vakuumplatte, insbesondere mit oberseitigen, kleinen Saugöffnungen, und/oder durch eine Ausgestaltung der Füße als Vakuumfüße, insbesondere mit unterseitigen, kleinen Saugöffnungen, erreicht werden. Die jeweiligen Saugöffnungen sind dann an ihrer dem jeweils anderen Element abgewandten Rückseite mit einer Unterdruck- oder Vakuumquelle zu verbinden. Dabei empfiehlt es sich, zwischen der Unterdruckquelle und den Saugöffnungen ein Ventil anzuordnen, um den Unterdruck bzw. das Vakuum abschalten zu können, wodurch sich dann der zunächst durch den Unterdruck arretierte, obere Schlitten wieder verschieben lässt.

Es sollte angemerkt werden, dass der obere Schlitten dank seiner unterseitigen Kontaktbereiche zu der Grundplatte, welche als Füße, Magnetfüße oder Vakuumfüße ausgebildet sein können, auch ohne den ersten Schlitten verwendbar ist, indem er ohne jenen auf der Grundplatte aufgesetzt wird. Dann ist zwar eine genaue Positionierung in horizontaler Richtung nicht oder nur unter Verwendung weiterer Ausrichtmittel möglich; sofern eine derart präzise Ausrichtung allerdings gar nicht erforderlich ist, genügt es, den zweiten Schlitten mit seinen unterseitigen Kontaktflächen auf die Grundplatte aufzusetzen; auch dann ist ein seitliches Versschieben möglich, allerdings nicht in einer bestimmten Richtung geführt, sondern nur in einem konstanten Abstand zu der Grundplatte.

Andererseits kann sogar auch auf diese Grundplatte verzichtet werden, sofern die betreffende Maschine ein Maschinenbett oder eine sonstige, ebene Fläche aufweist, worauf der erfindungsgemäße, zweite Schlitten mit seinen unterseitigen Aufstandsflächen, insbesondere an seinen Füßen oder Magnetfüßen oder Vakuumfüßen, aufsetzbar ist.

Es liegt im Rahmen der Erfindung, dass sich eine Skala an der Grundplatte und/oder der Oberseite des ersten und/oder zweiten Schlittens befindet, insbesondere zwischen zwei langgestreckten Führungselementen, insbesondere parallel zu jenen. An einer solchen Skala kann eine Bedienperson den aktuellen Verschiebeweg ablesen und ggf. notieren, um ihn bei einer späteren Vergleichsmessung oder (Weiter-) Bearbeitung wieder entsprechend einstellen zu können. Sofern Positions- und Orientierungswerte dokumentiert werden, ist eine Messung an einer reproduzierbar einstellbaren Messposition und -ausrichtung jederzeit wiederholbar.

Die Erfindung sieht weiterhin vor, dass die Grundplatte auf ihrer Oberseite wenigstens eine gerade gestreckte erste Skala aufweist, die sich in einer horizontalen Richtung erstreckt, vorzugsweise parallel zu dem (den) Parallelführungselement(en) an der Grundplatte. Dadurch kann unter Zusammenwirken mit dem Umfangsrand des darüber liegenden ersten Schlittens oder mit einer an jenem angeordneten Markierung für jede relative Schiebe-Einstellung zwischen Grundplatte und erstem Schlitten ein charakteristischer Skalenwert abgelesen und für spätere Aufspannungen von Mess- oder Bearbeitungsobjekten des selben Typs notiert oder gespeichert werden, um für jene dann sofort eine Referenz-Positionierung einstellen zu können, welche die Messung erleichtert und die Berechnung von Abeichungen oder sonstigen Parametern erlaubt und reproduzierbare Messungen ermöglicht.

Weitere Vorteile ergeben sich, indem der erste Schlitten auf seiner Oberseite wenigstens eine gerade gestreckte zweite Skala aufweist, die sich in einer horizontalen Richtung erstreckt, vorzugsweise parallel zu dem (den) Parallelführungselement(en) an dem ersten Schlitten und/oder rechtwinklig zu der ersten Skala an der Grundplatte. An dieser Skala kann unter Zusammenwirken mit dem Umfangsrand des darüber liegenden zweiten Schlittens oder mit einer an jenem angeordneten Markierung für jede relative Schiebe-Einstellung zwischen erstem und zweitem Schlitten ein charakteristischer Skalenwert abgelesen und für spätere Aufspannungen von Mess- oder Bearbeitungsobjekten des selben Typs notiert oder gespeichert werden, so dass dann sofort eine Referenz-Positionierung zwischen erstem und zweitem Schlitten einstellbar ist, um die Messung zu erleichtern und die Berechnung von Abeichungen gegenüber einem Referenzobjekt oder von sonstigen Parametern zu erlauben. Messungen werden damit auch reproduzierbar, insbesondere auch bei Messungen mittels anderer und/oder unterschiedlicher Gerätschaften, welche z. B. über die gleiche Positioniereinrichtung verfügen.

Bevorzugt weist der zweite Schlitten auf seiner Oberseite eine vorzugsweise kreisförmige dritte Skala zur Einstellung der dritten Achse auf oder eine sonstige Einrichtung zur Orientierung und/oder Positionierung eines zu messenden und/oder zu bearbeitenden Objektes oder eines Objektträgers. Damit kann eine wiederkehrende Positionierung von Mess- oder Bearbeitungsojekten entsprechenden Typs gelingen - entweder indem ein für eine Drehstellung charakterisitsches Skalenmaß ablesbar ist, welches für spätere Messungen notiert oder gespeichert werden kann, oder indem eine reproduzierbare Verdrehung auf rein mechanischem Weg sichergestellt wird.

Wenigstens ein langgestrecktes Führungselement und/oder eine Skala kann/können sich ununterbrochen über den ersten Schlitten und/oder über den zweiten Schlitten erstrecken, insbesondere mitten über dessen Zentrum hinweg. Eine ununterbrochene, langgestreckte Führungseinrichtung und/oder eine ununterbrochene Skala erlauben bzw. unterstützen einen maximalen Verschiebeweg zwischen den betreffenden Schlitten und/oder zwischen einem Schlitten und der Grundplatte und geben den Arbeits- bzw. Messbereich vor. Bspw. lassen sich mit unterbrochenen Führungselementen (Arbeits-) Begrenzungen realisieren.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1     eine erfindungsgemäße Vorrichtung, welche z.B. für die industrielle Computertomographie einsetzbar ist, in einer perspektivischen Ansicht, wobei eine Basisplate sowie ein erster, unterer und ein zweiter, oberer Schlitten erkennbar sind, sowie ein zu positionierendes Objekt;

Fig. 2    die Unterseite des von der Vorrichtung nach Fig. 1 abgenommenen, zweiten bzw. oberen Schlittens in einer perspektivischen Darstellung;

Fig. 3    den verbleibenden Teil der Vorrichtung nach Fig. 1, nachdem der zweite bzw. obere Schlitten abgenommen wurde, sowie

Fig. 4    die Unterseite des von der Vorrichtung nach Fig. 1 abgenommenen, ersten bzw. unteren Schlittens in einer perspektivischen Darstellung.

In verschiedenen Bereichen gilt es, gleichartige Produkte gleichartigen Bearbeitungs- und/oder Messschritten zu unterziehen. Andererseits können im Rahmen einer modernen Fertigung/Vermessung an einer dafür verwendeten Station zwischenzeitlich andere Produkte zu bearbeiten oder zu messen sein, so dass eine gefundene Einstellung für eine reproduzierbare Positionierung nicht permanent beibehalten werden kann oder aus Kapazitätsgründen auf andere Mess-/Fertigungsstätten ausweichen muss. Ist dann wieder ein Produkt aus der ersten Produktserie oder von einer anderen Mess-/Fertigungsstätte zu behandeln, muss eine dafür gefundene Positionierung wiederholbar einstellbar sein. Auch kann es nötig sein, dass ein Objekt, bspw. ein Teil oder ein Produkt, an einer anderen Maschine oder Anlage mit einer möglichst identischen Positionierung gemessen oder bearbeitet werden soll. In all diesen Fällen gilt es vor allem, den richtigen Ort entlang einer horizontalen Ebene zu finden, während die vertikale Ausrichtung bspw. durch die Art eines Trägers für das zu bearbeitende oder zu untersuchende Produkt vorgegeben ist.

Die in der Zeichnung beispielhaft dargestellte Ausführungsform einer Vorrichtung 1 dient daher für die variable und geführte Positionierung eines zu messenden und/oder zu bearbeitenden Objektes und/oder eines Objektträgers 2, in oder an dessen Oberfläche 3 ein zu messendes und/oder zu bearbeitendes Objekt festlegbar ist, insbesondere zur wiederholbaren Auffindung eines voreingestellten Ortes eines Objektes entlang einer horizontalen Ebene. Diese Ausrichtung umfasst demnach maximal drei Koordinaten, nämlich eine Verschiebung längs einer ersten, horizontalen Achse (bspw. in x-Richtung), einer Verschiebung längs einer zweiten, zu der ersten rechtwinkligen, horizontalen Achse (bspw. in y-Richtung), sowie ggf. eine Drehung um eine vertikale Drehachse (bspw. die z-Achse). Die Höhe in Richtung der z-Achse könnte bspw. durch eine Vorrichtung an dem Messtisch oder an einem Maschinenbett od. dgl., auf welchem die erfindungsgemäße Vorrichtung 1 fixiert ist, veränderbar sein.

Diese Einstellmöglichkeiten bietet die Vorrichtung 1. Sie verfügt hierzu über eine Grundplatte 4, über einen ersten, auf der Grundplatte 4 in einer ersten horizontalen Richtung (bspw. in x-Richtung) geführt verfahrbaren Schlitten 5 sowie über einen zweiten, auf dem ersten Schlitten 5 in einer zu der ersten Richtung lotrechten, zweiten horizontalen Richtung (bspw. in y-Richtung) verfahrbaren Schlitten 6.

Wie man der Zeichnung weiter entnehmen kann, haben die Grundplatte 4, der erste Schlitten 5 sowie der zweite Schlitten 6 jeweils eine etwa scheibenförmige und/oder plattenförmige Gestalt, und sie liegen mit ihren Flachseiten auf- oder aneinander.

Vorzugsweise hat die Grundplatte 4 die größte Grundfläche, damit die beiden Schlitten 5, 6 selbst bei extrem außermittiger Positionierung noch mit ihrem jeweiligen Schwerpunkt oberhalb der Grundplatte 4 liegen und von jener sicher und kippsicher abgestützt werden.

Die Unterseite 7 der Grundplatte 4 kann vollkommen eben sein und/oder Befestigungseinrichtungen aufweisen, damit die Platte auf einem Tisch horizontal ausrichtbar und montierbar ist. Für eine Zentrierung bestünde die Möglichkeit, im Zentrum der Grundplatte 4 an deren Unterseite 7 eine Vertiefung oder einen Zapfen vorzusehen, der mit einem Pendant im Zentrum des Tisches zusammenwirken kann. Stattdessen könnte die Grundplatte 4 mit ihrem Umfang, oder mit einem oder mehreren, an ihrer Unterseite angeordneten Zapfen auch in einem horizontalen Spannfutter aufgespannt sein, bspw. in einem horizontalen Backen-Spannfutter. Als weitere Option könnte die Grundplatte 4 als Dreipunkt-Adapter ausgebildet sein, mit mehreren, an der Unterseite 7 angeordneten Kugeln, Rollen oder sonstigen Wälzkörpern, welche vorzugsweise jeweils paarweise nahe der Peripherie der Grundplatte 4 an um jeweils 120° gegeneinander versetzten Positionen platziert sind. Die Kugeln, Rollen oder sonstigen Wälzkörper eines jeden solchen Paars sind in der Lage, zwischen sich je eine Erhebung eines als Auflagefläche dienenden Tisches zu zentrieren. Sind alle drei Erhebungen solchermaßen zentriert, so befindet sich die Grundplatte 4 genau zentrisch über dem Mittelpunkt zwischen den drei Erhebungen des Tisches.

Die in der Zeichnung dargestellte Grundplatte 4 verfügt ferner über einen vorzugsweise kreisförmigen Rand 8. Eine kreisförmige Grundplatte 4 lässt sich an nahezu allen Tischen fixieren. Allerdings kann die Grundplatte 4 auch eine rechteckige, quadratische oder sonstige Form aufweisen. Während eine Kreisform für Messanwendungen mit rotierender Verstellung des Messobjektes und/oder mit umlaufender Verstellung der Messeinrichtung im weitesten Sinne zumeist zu bevorzugen ist, kann für Bearbeitungen eine rechteckige Grundplatte 4 vorteilhaft sein, so dass oben auf der Anordnung sodann bspw. ein Schraubstock oder eine sonstige Fixierungseinrichtung für ein zu bearbeitendes Objekt angebracht werden kann, weil solche Fixierungseinrichtungen bzw. für deren Abstützung vorgesehene Tische von Bearbeitungsmaschinen häufig eine quadratische oder rechteckige Grundfläche aufweisen, so dass sich eine maximale Auflagefläche realisieren lässt.

Die Grundplatte 4 hat eine gleichbleibende Stärke; demnach ist ihre ebene Oberseite 9 parallel zu ihrer ebenen Unterseite 7.

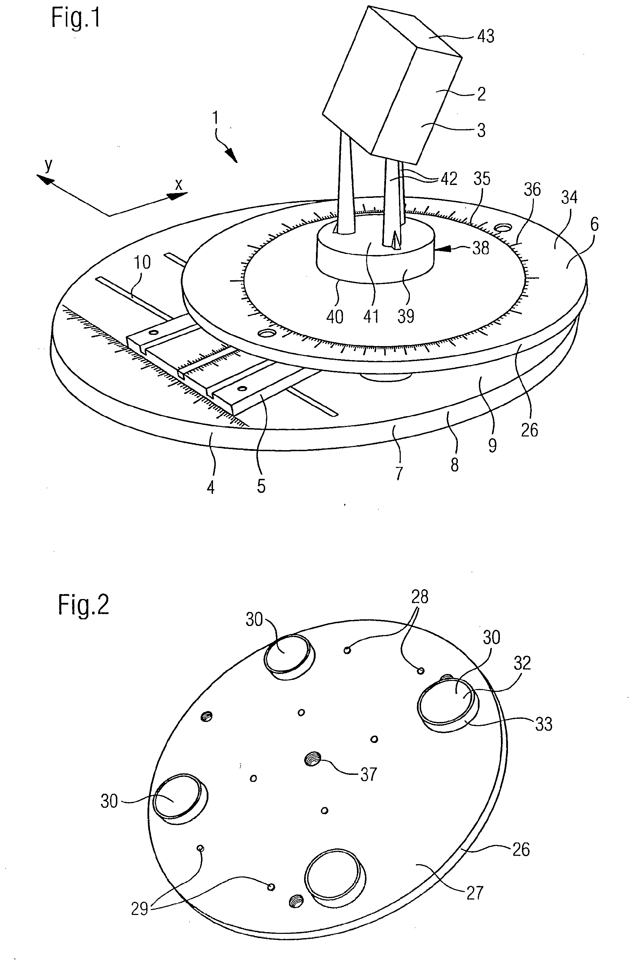

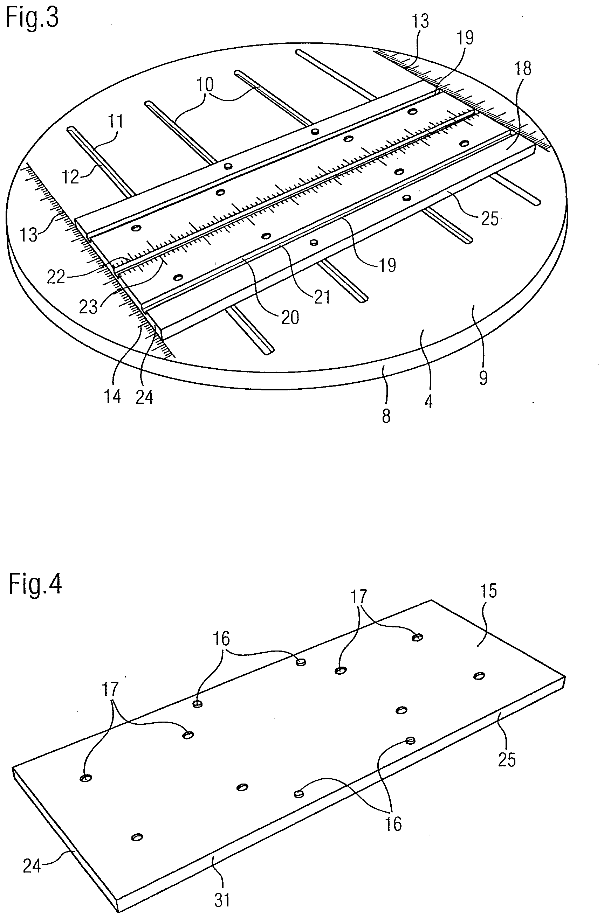

Wie man den Figuren 1 und 3 entnehmen kann, sind in der Oberseite 9 der Grundplatte 4 ein oder mehrere langgestreckte Führungsnuten 10 eingearbeitet, welche die Grundplatte 4 jedoch vorzugsweise nicht vollständig durchsetzen. Jede derartige Führungsnut 10 hat demnach zwei vorzugsweise ebene Flanken 11 und einen ebenen Grund 12. Falls es - wie in den Figuren 1 und 3 dargestellt - mehrere solcher Führungsnuten 10 gibt, so verlaufen davon einige oder vorzugsweise alle parallel zueinander, dienen also als gemeinsame Führungseinrichtung.

Die Führungsnuten 10 können sich jeweils bis zu dem Rand 8 erstrecken und dort münden, enden aber vorzugsweise jeweils vorher, so dass die Verschiebungsbewegung eines darin geführten Schlittens 5, 6 begrenzt ist. Solchermaßen sind alle zueinander parallelen Führungsnuten 10 vorzugsweise gleich lang und erstrecken sich solchenfalls über ihre gesamte Länge nebeneinander.

Im vorliegenden Beispiel gibt es vier derartige Führungsnuten 4, von denen jeweils zwei auf einer Hälfte der Grundplatte 4 angeordnet sind, spiegelbildlich zueinander bezüglich einer die Grundplatte 4 in zwei Hälften teilenden Mittellinie, welche in der Zeichnung nicht dargestellt ist.

Ferner gibt es auf der Oberseite 9 der Grundplatte 4 noch mindestens eine, bei der dargestellten Ausführungsform zwei, Längenskalen 13. Jede Längenskala 13 erstreckt sich parallel zu den Führungsnuten 10 in der Oberseite 9 der Grundplatte 4. Zusätzlich oder anstelle von Längenskalen 13 können auch ein oder mehrere Fadenkreuze vorgesehen sein.

Bevorzugt findet (finden) die Längenskala (Längenskalen) 13 auf der Grundplatte 4 ihren Platz nicht zwischen den Führungsnuten 10, sondern jenseits außerhalb aller Führungsnuten 10, d.h. zwischen dem Rand 8 und der benachbarten, am weitesten vom Zentrum der Grundplatte 4 entfernten Führungsnut 10.

Jede Längenskala 13 kann mit Teilstrichen 14 versehen sein, um - bspw. ausgehend von einem zu den Führungsnuten 10 rechtwinklig verlaufenden Radialstrahl von der Mitte der Grundplatte 4 als Nullpunkt - zur Messung des Abstandes von einem Nullpunkt der betreffenden Längenskala 13 gleiche Intervalle abzuteilen, bspw. mit einer Länge von jeweils 1 Millimeter. Jeder fünfte oder zehnte Teilstrich 14 kann länger ausgeführt sein, um Intervalle von 5 Millimeter oder 1 Zentimeter besonders hervorzuheben. Natürlich können auch andere Orientierungshilfen sowie kleinere Skalierungen angebracht sein.

Im Folgenden soll/kann die Richtung, längs welcher sich die langgestreckten Führungsnuten 10 und die Längenskalen 13 auf der Oberseite 9 der Grundplatte 4 erstrecken, als y-Richtung bezeichnet werden.

Wie besonders deutlich in Fig. 3 zu sehen ist, liegt auf der Grundplatte 4 ein erster Schlitten 5 flächig auf.

Der erste Schlitten 5 hat vorzugsweise eine rechteckige Grundfläche. Seine Länge entspricht vorzugsweise dem Abstand zwischen den beiden zueinander parallelen Längenskalen 13 auf der Oberseite 9 der Grundplatte 4, um beim Ablesen der Position - ggf. mittels einer Zeigereinrichtung am Schlitten 5 - einen für die jeweilige Position charakteristischen Wert der Längenskalen 13 hervorzuheben; die Breite des ersten Schlittens 5 kann kürzer sein als seine Länge, bspw. nur halb so groß oder noch kleiner, und entspricht vorzugsweise nur etwa einem Drittel seiner Länge oder gar noch weniger.

Auf seiner Unterseite 15 verfügt der erste Schlitten 5 über mehrere, kurze, etwas überstehende Führungsstifte 16 oder Führungsleisten, welche zum Eingreifen in Führungsnuten 10 dienen sollen.

Dabei können einer Führungsnut 10 jeweils zwei Führungsstifte 16 oder Führungsleisten zugeordnet sein. Durch diese Maßnahme ist eine auch minimale Verdrehung des ersten Schlittens 5 gegenüber der Grundplatte 4 vollkommen ausgeschlossen.

Bei dem in Fig. 4 dargestellten Schlitten 5 sind insgesamt vier Führungsstifte 16 vorgesehen, jeweils zwei für die beiden inneren Führungsnuten 10.

Jeder Führungsstift 16, aber auch eine ggf. vorhandene Führungsleiste, ist vorzugsweise in einer kleinen Ausnehmung oder Durchgangsausnehmung 17 fixiert, bspw. eingepresst oder eingeklebt oder eingelötet oder eingeschraubt. Eine Durchgangsausnehmung 17 bietet den Vorteil, dass ein Führungsstift 16 jederzeit wieder ausgewechselt werden kann, bspw. um in andere Durchgangsausnehmungen 17 eingesetzt zu werden, falls eine andere Grundplatte 4 mit anderen Abständen zwischen den Führungsnuten 10 verwendet werden soll. In Fig. 4 sind zusätzlich zu den vier mit je einem Führungsstift 16 bestückten Durchgangsausnehmungen 17 noch acht weitere, unbestückte Durchgangsausnehmungen 17 zu sehen.

Falls - wie die Erfindung weiterhin vorsieht - nicht alle Führungsnuten 10 auf der Oberseite 9 der Grundplatte 4 die selbe Breite haben, sind auch die jeweils darin eingreifenden Führungsstifte 16 oder Führungsleisten an die jeweilige Nutbreite anzupassen, haben dann also auch unterschiedliche Stärken bzw. Breiten. Dies hat zur Folge, dass nicht jeder Führungsstift 16 in jede Führungsnut 10 einsetzbar ist, sondern in die dazu bestimmte Führungsnut 10.

Durch eine solche Maßnahme, oder auch durch eine asymmetrische Anordnung derselben, kann sichergestellt werden, dass der erste Schlitten 5 stets in der selben (Dreh-) Ausrichtung auf die Grundplatte 4 aufgesetzt werden muss. Dies ist insbesondere für die richtige Orientierung einer oberseitigen Längenskala 22 auf dem ersten Schlitten 5 wichtig. In Fig. 3 könnten diesbezüglich besipielsweise die beiden linken Führungsnuten 10 eine geringere Breite aufweisen als die beiden rechten Führungsnuten 10, oder genau umgekehrt, also breitere linke Führungsnuten 10 und dünnere rechte Führungsnuten 10, oder auch asymmetrisch angeordnet sein.

Der erste Schlitten 5 ist somit in y-Richtung gegenüber der Grundplatte 4 verfahrbar, wenn die Führungsstifte 16 in die Führungsnuten 10 eingreifen. Der maximale Verstellweg entspricht dabei der Länge einer Führungsnut 10 abzüglich dem Abstand zwischen den beiden in die selbe Führungsnut 10 eingreifenden Führungsstiften.

Dieser maximale Verstellweg erstreckt sich vorzugsweise jeweils hälftig zu beiden Seiten einer mittigen Nullmarkierung auf den Längenskalen 13.

Die Oberseite 18 des ersten Schlittens 5 ist in Fig. 3 zu sehen. Man erkennt dort mehrere in Längsrichtung des ersten Schlittens 5 verlaufende Führungsnuten 19.

Im vorliegenden Beispiel handelt es sich dabei um eine mittlere Führungsnut 19 und zwei dazu parallele, symmetrisch zu beiden Seiten derselben angeordnete, seitlichen Führungsnuten 19.

Alle Führungsnuten 19 des ersten Schlittens haben vorzugsweise den selben Querschnitt, mit zueinander parallelen, ebenen Flanken 20 und einem ebenen Grund 21.

Auf der Oberseite 18 des ersten Schlittens 5 kann es außerdem noch wenigstens eine Längenskala 22 geben.

Gemäß Fig. 3 verfügt der erste Schlitten 5 sogar über zwei derartige Längenskalen 22, welche sich entlang der beiden Oberkanten der mittleren Führungsnut 19 erstrecken.

Bevorzugt ist auch jede Längenskala 22 des ersten Schlittens 5 ebenfalls durch Teilstriche 23 in gleiche Längenintervalle von bspw. je einem Millimeter unterteilt. Jeder fünfte und/oder zehnte Teilstrich 23 kann durch eine größere Länge hervorgehoben sein, um Intervalle von 5 Millimetern oder 1 Zentimer besonders hervorzuheben.

Bevorzugt erstrecken sich die Führungsnuten 19 und die Längenskalen 22 vollständig zwischen einander gegenüber liegenden Bereichen der Schmalseiten 24 des Randes 25 des ersten Schlittens 5.

Die Nullpunkte der Längenskalen 22 liegen vorzugsweise nicht in deren Mitte. Vielmehr kann es je einen Nullpunkt im Bereich jeder Schmalseite 24 des ersten Schlittens 5 geben, und von dort wird dann der Abstand zu der betreffenden Schmalseite 24 nach innen zunehmend gezählt, vorzugsweise an einer Schmalseite 24 mit positivem und an der anderen Schmalseite 24 mit negativem Vorzeichen. Unterschiedliche Vorzeichen können bspw. einmal im Bereich der jeweiligen Schmalseite 24 angeordnet sein. Natürlich können die Nullpunkte auch nach innen aufeinander zu versetzt sein, und zwar so weit, dass ihr Abstand genau der entsprechenden Erstreckung des zweiten, oberen Schlittens 6 entspricht; dann kann letzterer derart in eine mittige Nullstellung verbracht werden, dass an beiden Längenskalen 22 zugleich der Skalenwert null ablesbar ist.

Die Längsrichtung des ersten Schlittens 5 und damit die Längserstreckung seiner Führungsnuten 19 und seiner Längenskalen 22 verläuft zwar auch horizontal wie die Führungsnuten 10 und Längenskalen 13 der Grundplatte 4, jedoch unter einem horizontalen Winkel von 90° demgegenüber verdreht. Die Richtung der Längenskalen 22 soll im folgenden deshalb mit x-Richtung bezeichnet werden. x- und y-Richtung stehen lotrecht aufeinander wie die x- und y-Achse eines rechtwinkligen Koordinatensystems.

Oberhalb des ersten Schlittens 5 liegt ein zweiter Schlitten 6, der in Fig. 1 perspektivisch von oben und in Fig. 2 perspektivisch von unten zu sehen ist.

Der zweite, obere Schlitten 6 kann wiederum einen vorzugsweise kreisförmigen Rand 26 haben. Ein kreisförmiger zweiter Schlitten 6 lässt die Montage von vielerlei Mess- oder Bearbeitungsobjekten zu und eignet sich besonders für rotierende Messungen. Allerdings könnte der zweite Schlitten 6 auch eine rechteckige, quadratische oder sonstige Form aufweisen. Dies kann sich je nach dem bevorzugten Anwendungsfall richten. Für rotierende Messanwendungen eignet sich oftmals ein oberer Schlitten 6 mit einem kreisförmigen Rand 26 besser, während für Längsmessungen und/oder für die Montage eines Schraubstocks oder eine vergleichbaren Fixierungseinrichtung für ein zu bearbeitendes Objekt häufig ein oberer Schlitten 6 mit einer rechteckigen oder gar quadratischen Grundfläche zu bevorzugen ist, denn solche Fixierungseinrichtungen verfügen zumeist über eine quadratische oder rechteckige Grundfläche, welche dann vollflächig auf dem zweiten Schlitten 6 auflegbar ist und dort eine optimale Unterstützung und Kippsicherheit erfährt.

Auf den Längenskalen 22 kann man dann den Verschiebeweg in x-Richtung ablesen, indem man das jeweilige Längenmaß an dem gerade nach innen verschobenen Bereich des Randes 26 des zwieten Schlittens 6 abliest.

Der Verschiebeweg in y-Richtung ergibt sich, indem man die Mittellinie des ersten Schlittens 5 als Zeiger längs einer der Längenskalen 13 des ersten Schlittens verwendet oder einen Stift oder Pfeil anbringt, inbsesondere in Verlängerung eben dieser Mittellinie.

Die Unterseite 27 des oberen Schlittens 6 ist in Fig. 2 zu sehen. Man erkennt auch dort eine Mehrzahl von erhabenen Führungsstiften 28. Diese können in Durchgangsbohrungen oder Vertiefungen 29 eingesetzt und gehalten sein, bspw. durch Klemmen, Kleben, Löten und/oder Verschrauben.

Bevorzugt sind dabei zwei oder mehrere Führungsstifte 28 je einer Führungsnut 19 des ersten Schlittens 5 zugeordnet, um eine Verdrehung zwischen erstem und zweitem Schlitten 5, 6 auszuschließen.

Im dargestellten Beispiel sind acht Vertiefungen 29 zu sehen, von denen jeweils vier je einer der beiden seitlichen Führungsnuten 19 zugeordnet sind.

Falls - wie die Erfindung weiterhin vorsieht - nicht alle Führungsnuten 19 auf der Oberseite 18 des ersten Schlittens 5 die selbe Breite haben und/oder symmetrisch angeordnet sind, sind auch die jeweils darin eingreifenden Führungsstifte 28 oder Führungsleisten an die jeweilige Nutbreite und/oder Asymmetrie dieser anzupassen, haben dann also auch unterschiedliche Stärken bzw. Breiten und/oder sind asymmetrisch angeordnet. Dies hat zur Folge, dass nicht jeder Führungsstift 28 in jede Führungsnut 19 passt, sondern nur in die dazu bestimmte Führungsnut 19 einer asymmetrischen Anordnung. Durch eine solche Maßnahme kann sichergestellt werden, dass der zweite Schlitten 6 stets in der selben (Dreh-) Ausrichtung auf dem ersten Schlitten 5 aufgesetzt werden muss. Dies ist insbesondere für die richtige Orientierung einer oberseitigen Skalierung 35 auf dem zweiten Schlitten 6 wichtig. In Fig. 3 könnte diesbezüglich beispielsweise die linke, außermittige Führungsnut 19 eine geringere Breite aufweisen als die jener gegenüber liegende, rechte Führungsnut 19, oder genau umgekehrt, also breitere linke Führungsnut 19 und dünnere rechte Führungsnut 19, und/oder die Führungsnut 19 asymmetrisch angeordnet sein.

Auf der Unterseite 27 sind außerdem mehrere Magnete 30 zu erkennen, welche vorzugsweise gegenüber der Unterseite 27 erhaben sind und als Füße dienen. Der Überstand der Magnete 30 gegenüber der Unterseite 27 sollte etwa der Stärke des ersten Schlittens 5 entsprechen, jedoch vorzugsweise größer sein, insbesondere minimal größer. Indem die Magnete 30 um ein größeres Maß über die Unterseite 27 des zweiten, oberen Schlittens 6 überstehen als die Stärke des ersten, unteren Schlittens 5, werden sie nicht infolge des ersten Schlittens 5 von der Grundplatte 4 abgehoben, sondern sitzen bündig auf jener auf, und infolge dieses unmittelbaren Kontakts ist die magnetische Haltekraft zwischen dem zweiten, oberen Schlitten 6 und der Grundplatte 4 maximal.

Bei den Magneten 30 handelt es sich vorzugsweise um starke Permanentmageneten, bspw. aus Neodym. Sie sind dazu ausersehen, mit der Grundplatte 4, die bevorzugt aus einem magnetisierbaren Material besteht, magnetisch zusammenzuwirken. Die Magnete 30 können auch in Abstandsnasen oder Füße eingearbeitet sein, Diese und/oder die Magnete 30 sollten eine größere Horizontalerstreckung aufweisen als die Breite einer, vorzugsweise jeder Führungsnut in der Grundplatte 4, um leicht und ohne zu verhaken über jene Führungsnuten hinweg gleiten zu können.

Bevorzugt gibt es wenigstens vier derartige Magneten 30, welche vorzugsweise in einem Viereck, bspw. einem Quadrat, auf der Unterseite 27 des zweiten Schlittens 6 festgelegt sind, bspw. angeklebt oder angeschraubt.

Eine Kantenlänge des vorzugsweise quadratischen Vierecks, an dessen Ecken je ein Magnet 30 sitzt, kann größer sein als die Breite des ersten Schlittens 5, insbesondere größer als die Länge einer Schmalseite 24 des ersten Schlittens 5. Insbesondere ist der entlang einer solchen Kantenlänge eines gedachten Vierecks gemessene Abstand zwischen zwei Magneten 30 größer als die Breite des ersten Schlittens 5, insbesondere größer als die Länge einer Schmalseite 24 des ersten Schlittens 5.

Dadurch findet der erste Schlitten 5 genügend Platz zwischen zwei solchen Magneten 30. Die Magnete 30 umgreifen dabei den ersten Schlitten 5 an dessen Längsseiten 31 und liegen mit ihren freien Stirnseiten 32 unmittelbar auf der Oberseite 9 der Grundplatte 4 auf.

Auf der Oberseite 9 der Grundplate 4 werden die Magnete 30 magnetisch angezogen und sind somit zwar in einer von der x- und y-Achse aufgespannten Ebene verschiebbar, ansonsten aber nahezu unlösbar festgelegt. Diese magnetische Fixierungskraft dient außerdem zum geführten Festhalten des ersten Schlittens 5 zwischen der Grundplatte 4 und dem zweiten Schlitten 6, sowie zum Einhalten bzw. Arretieren einer eingestellten Position des oberen Schlittens an einer stufenlos vorwählbaren Stelle. Hierzu werden keine weiteren Fixierungseinrichtungen benötigt.

Andererseits ist es auch möglich, dass der erste Schlitten 5 vorzugsweise langgestreckte Ausnehmungen für die Magnete 30 aufweist, so dass auch kleinere, obere Schlitten 6 verwendbar sind. Solche Ausnehmungen können ggf. als langgestreckte Schlitze ausgestaltet sein, deren Breite wenigstens der Breite eines Magnets 30 bzw. eines Fusses entspricht, und welche zu der Richtung der oberen Parallelführung, also der Parallelführung zwischen den beiden Schlitten 5, 6, parallel verlaufen. Solchenfalls muss der erste Schlitten 5 nicht vollständig zwischen den Magneten 30 Platz finden, sondern bietet mit seinen Schlitzen ausreichenden Bewegungsspielraum für die Magnete 30 des oberen Schlittens 6, indem jene diese schlitzförmigen Ausnehmungen durchgreifen und sich dort hindurch bis zu der Grundplatte 4 erstrecken, mit der sie magnetisch zusammenwirken. Die Länge solcher Ausnehmungen geben auch den maximalen Verschiebeweg vor.

Wie man Fig. 2 entnehmen kann, haben die Magnete 30 vorzugsweise eine zylindrische Gestalt, insbesondere in einer eher flachen Bauhöhe. Man kann dabei an die Gestalt einer flachen Tablette oder eines Knopfs denken. Die Magnete 30 können unmittelbar, d.h. blank, verwendet werden, oder in ein nach unten vozugsweise offenes Gehäuse 33 eingesetzt sein, oder auch in Füßen eingebaut sein.

Vorzugsweise sollten Topfmagnete verwendet werden. Topfmagnete haben Die Eigenschaft und auch den Vorteil, den Magnetfluss umzuleiten, also den Magnet abzuschirmen und den Magnetfluss direkt in die Grundplatte einzuleiten, welcher ansonsten die Messungen störend beeinflussen könnte.

Andererseits können die Magnete 30 auch in Füßen integriert sein, welche an der Unterseite des zweiten Schlittens 6 festgelegt sind. Solchenfalls sind als geometrische Abmessungen die Abmessungen dieser Füße heranzuziehen, bspw. für die Auslegung von Schlitzen in dem ersten Schlitten 5.

Auf seiner Oberseite 34 verfügt der obere Schlitten 6 vorzugsweise über eine rundum laufende Skalierung 35 von kreisförmiger Gestalt, und/oder über sonstige Markierungen oder Anlagestellen.

Diese Skalierung 35 ist ebenfalls durch Teilstriche 36 unterteilt, vorzugsweise in Winkelgrade, insbesondere von 0° bis 360°. Dabei kann jeder fünfte und/oder zehnte Teilstrich 36 verlängert ausgeführt sein, um Intervalle von 5° oder 10° deutlicher zu kennzeichnen.

Schließlich kann (können) in der Oberseite 34 eine oder mehrere Bohrungen vorgesehen sein, insbesondere eine zentrale Bohrung 37, worin ein Aufsatzteil 38 mit einem unterseitigen Zapfen zentriert werden kann, welches sodann relativ zu dem oberen Schlitten 6 allenfalls noch verdreht weren kann, bis eine Markierung an dem Aufsatzteil 38 mit einem bestimmten Teilstrich der Skalierung 35 auf einem gemeinsamen, von der Bohrung 37 ausgehenden Radialstrahl liegt.

Andererseits können zur Zentrierung und/oder Positionierung eines Aufsatzteils 38 in der Oberseite 34 des oberen Schlittens 6 auch Anlagezapfen vorgesehen sein, beispielweise zwei exzentrisch angeordnete Vertiefungen und/oder Anlagezapfen in etwa gleichem Abstand von der Mitte des zweiten Schlittens 6, jedoch in unterschiedliche Raumrichtungen exzentrisch verschoben, bspw. unter einem Zwischenwinkel von 30° bis 150°, oder unter einem Zwischenwinkel zwischen 45° und 135°, insbesondere unter einem Zwischenwinkel von 60° bis 120°, oder unter einem Zwischenwinkel von 75° bis 105°. Solche exzentrisch angeordnete Anlagepunkte erlauben einerseits eine präzise Ausrichtung; andererseits kann ein Aufsatzteil durch seitliches Verschieben jederzeit wieder gelöst werden, was insbesondere bei einer magnetischen Fixierung förderlich sein kann.

Das in Fig. 1 beispielhaft wiedergegebene Aufsatzteil 38 verfügt über eine Grundplatte 39 mit einer ebenen Unterseite 40 zum Aufsetzen auf den oberen Schlitten 6 sowie mit einer Oberseite 41, aus welcher vorzugsweise mehrere Stifte 42 etwa nadelartig nach oben ragen.

In der Unterseite 40 der Grundplatte 39 des Aufsatzteils 38 kann eine Vertiefung vorgesehen sein, beispielsweise eine zentrale, zylindrische Vertiefung mit einer lotrecht zur Grundfläche verlaufenden Längsachse. Eine solche Vertiefung kann zur Zentrierung der Grundplatte 39 gegenüber dem zweiten, oberen Schlitten 6 verwendet werden.

Dazu kann in der Oberseite 34 des zweiten, oberen Schlittens 6 als Pendant zu der Vertiefung in der Unterseite 40 der Grundplatte 39 des Aufsatzteils 38 ein nach oben ragender Zapfen vorgesehen sein, dessen Durchmesser auf die zugeordnete Vertiefung in der Unterseite 40 der Grundplatte 39 des Aufsatzteils 38 passend eingesetzt werden kann, d.h., mit keinem oder höchstens mit einem kleinen radialen Spiel, so dass durch Einführen des Zapfens in die für jenen gedachte Vertiefung in dem Aufsatzteil 38 jenes in radialer Hinsicht gegenüber dem zweiten, oberen Schlitten 6 festgelegt ist und nur noch um die Achse dieses Zapfens gedreht werden kann.

Jener Zapfen ist vorzugsweise im Zentrum des zweiten, oberen Schlittens 6 angeordnet, und seine Längsachse zeigt lotrecht von der ebenen Oberseite 34 des oberen Schlittens 6 weg.

Der Zapfen kann an seinem oberen Ende eine Verjüngung oder gar Spitze aufweisen, so dass er leicht und selbstzentrierend in die Vertiefung in die Unterseite 40 der Grundplatte 39 des Aufsatzteils 38 hinein gleiten kann.

Ferner kann der Zapfen gegenüber dem Schlitten 6 auch beweglich sein, insbesondere in Richtung seiner Längsachse, welche bevorzugt lotrecht zu der ebenen Oberseite 34 des oberen Schlittens 6 verläuft.

Zu diesem Zweck kann der Zapfen in einer Bohrung in der Oberseite 34 des Schlittens 6 aufgenommen und entlang jener Bohrung verschiebbar sein. Wenn jene Bohrung lotrecht zu der Oberseite 34 des oberen Schlittens 6 verläuft, so ist der Zapfen in eben jener Richtung verstellbar. Der Zapfen kann allerdings einen Anschlag aufweisen, so dass er nicht nach oben aus der Bohrung herausrutschen kann, beispielsweise einen rundum laufenden Bund, welcher sich in oder unterhalb der Bohrung befindet und einen größeren Durchmesser aufweist als die lichte Öffnung der Bohrung.

Eine Feder oder ein Federelement kann vorgesehen sein, um den Zapfen stets so weit als möglich nach oben zu drücken, d.h., so weit, bis der oben erwähnte Anschlag ein weiteres Heraustreten über die Oberseite 34 des oberen Schlittens 6 verhindert.

Schließlich kann ein Mechanismus vorgesehen sein, um den Zapfen entgegen der Feder nach unten bzs. In die Bohrung in der Oberseite 34 des oberen Schlittens 6 hinein zu bewegen. Hierbei kann es sich bspw. um einen innerhalb einer radial zu dem Zapfen verlaufenden Bohrung verstellbaren Entriegelungsstab handeln, welcher an seinem inneren, dem Zapfen zugewandten Ende eine Schrägfläche aufweist, die mit einer anderen Schrägfläche an einem Mantelbereich des Zapfens zusammenwirkt, derart, dass bei einem radial nach innen gerichteten Druck auf das äußere Ende des Entriegelungsstabs aufgrund der dann aneinander gleitenden Schrägflächen der Zapfen in dessen Bohrung im Zentrum der Oberseite 34 des oberen Schlittens 6 hinein gezogen wird, entgegen dem nach außen gerichteten Druck der Feder.

Mit dieser Mechanik kann bei Bedarf der federnde Zapfen manuell zurückgezogen werden, bis er vollständig aus der Vertiefung in der Unterseite 40 des Aufsatzteils 38 herausgehoben ist und jenes sodann gegenüber dem oberen Schlitten 6 verschoben werden kann.

Die Stifte 42 können sich nach oben verjüngen und/oder in je einer oberseitigen Spitze enden.

Vorzugsweise haben die Stifte 42 zueinander parallele Schäfte, deren Querschnitt in ihrer Längsrichtung konstant sein kann, sich aber ggf. auch ändern könnte. Bevorzugt hat jeder Stift 42 an seinem der Spitze abgewandten Ende einen verbreiterten Kopf - ähnlich einem Nagelkopf - womit er in der Grundplatte 39 verankert sein kann. Die Grundplatte 39 kann aus einem Kunstharz od. dgl. geformt sein und in engem Kontakt mit dabei umflossenen Köpfen der Stifte 42 stehen, so dass jene sich nicht ungewollt aus der Grundplatte 39 lösen können. Die Stifte 42 können jeweils einen Durchmesser von einem bis mehreren Millimetern aufweisen, sowie gegenseitige Abstände von etwa fünf Millimetern bis etwa 40 Millimetern. Sie bestehen vorzugsweise aus Metall. Vorzugsweise ist die freie Länge l eines Stiftes 42 größer als dessen Durchmesser d, beispielsweise wenigstens fünf mal so lange:

$$l \geq 5 * d;$$

vorzugsweise wenigstens zehn mal so lange:

$$l \geq 10 * d;$$

insbesondere wenigstens fünfzehn mal so lange:

$$l \geq 15 * d;$$

oder sogar wenigstens zwanzig mal so lange:

$$l \geq 20 * d.$$

Oben auf den Stiften 42 kann ein Block 43 aus einem vorzugsweise leichten Material aufgesteckt werden, bspw. aus einem geschäumten Material, und/oder aus einem sonstigen, leichten Material wie bspw. Balsaholz. Bei einer ersten Verwendung eines solchen Blocks 43 stechen die Stifte 42 in das zunächst noch geschlossene Material des Blockes 43 und bohren sich dabei ihre Lochkanäle selbst, in welchen sie dann anschließend reibschlüssig stecken bleiben, um den Block 43 unverrückbar festzuhalten.

In jenen Block 43 kann sodann ein zu messendes Objekt eingedrückt werden oder anderweitig daran fixiert werden.

Der Block 43 dient zusammen mit dem Aufsatzteil 38 dann als Objektträger 2. Damit der Block 43 reprodzierbar wieder auf die Stifte 42 des Aufsatzteils 38 aufsteckbar ist, können die Stifte 42 in einem "codierten" Raster angeordnet sein, also nicht in einem regelmäßigen Raster, sondern in einem variablen Raster, so dass jeder Stift 42 nur dann ein bereits eingedrücktes Loch in dem Block 43 findet, wenn der Block 43 wieder in der selben Drehposition auf das Aufsatzteil 38 aufgesteckt wird.

Diese grundlegende Ausführungsform der Positionier-Vorrichtung 1 kann auf verschiedene Weise modifiziert werden:
Falls der obere Schlitten 6 eine ausreichende Größe aufweist, könnten die Magnete 30 anstelle an dem oberen Schlitten 6 bspw. auch an der Grundplatte 4 fixiert sein und auf den oberen Schlitten 6 einwirken.

Der untere Schlitten 5 muss nicht aus einem magnetischen Material hergestellt sein, da er nicht an der magnetischen Verbindung zwischen oberem Schlitten 6 und Grundplatte 4 beteiligt ist.

Außerdem könnte die Position der Führungsnuten und Führungsstifte vertauscht sein, so dass an der Oberseite des jeweils unteren Teils nach oben ragende Führungsstifte und an der Unterseite des darüber liegenden Teils nach unten offene Führungsnuten angeordnet wären.

Darüber hinaus kann zur Relativverstellung zwischen den einzelnen Elementen eine Antriebsspindel für jede Achse vorgesehen sein, die mit einem an einem anderen Teil der Vorrichtung 1 drehfest fixierten Innengewindeelement kämmt. Sowohl für die Verstellung in x-Richtung als auch in y-Richtung kann je eine solche Antriebsspindel vorgesehen sein.

Eine solche Antriebsspindel könnte manuell angetrieben werden, bspw. über eine Kurbel, oder automatisch, bspw. von einem Elektromotor.

Ein solcher Antriebsmotor könnte als Schrittmotor ausgeführt sein und durch schrittweise Ansteuerung eine präzise und gleichzeitig vollautomatische Einstellung der betreffenden Spindel bewirken, entsprechend für ein zu messendes oder zu bearbeitendes Objekt eingegebener oder aus einem Speicher ausgelesener Koordinaten, bspw. x- und y-Koordinaten, während die φ-Koordinate entweder manuell eingestellt werden sollte oder über einen anbaubaren Antrieb für das Aufsatzteil 38 eingestellt werden könnte.

Ferner ließe sich die erfindungsgemäße Vorrichtung 1 dank des festen, magnetischen Zusammenhalts auch in einer vertikalen statt horizontalen Ausrichtung betreiben, oder unter einem beliebigen Neigungswinkel, ggf. sogar hängend, falls dies erforderlich sein sollte.

Aufgrund der äußerst stabilen Magnettechnik eignet sich die Erfindung auch für andere Zwecke als reine Messungen, bspw. könnte auf dem oberen Schlitten 6 anstelle eines Aufsatzteils 38 auch ein (kleiner) Schraubstock fixiert werden, so dass die Vorrichtung 1 auch für feinmechanische Arbeiten verwendbar wäre, bspw. im Modellbau.

Ferner können die Grundplatte 4 sowie die Schlitten 5, 6 jede denkbare Umfangsform aufweisen. So könnte die Grundplatte 4 und/oder der obere Schlitten 6 insbesondere auch eine rechteckig und/oder quadratische Form aufweisen.

Die Führungsstifte können auch durch Führungsleisten oder -profile ersetzt sein.

Ferner ist es im Fall einer ausreichend großen Grundplatte 4 möglich, insgesamt mehrere Führungsnuten an unterschiedlichenStellen einzuarbeiten, an welchen sodann mehrere, ggf. auch verschiedene, erste und/oder zweite Schlitten 5, 6 direkt oder indirekt geführt sein können. Sofern solche Führungsnuten vertieft sind, können Magnete 30 oder sonstige Füße der Schlitten 5, 6 ungehindert darüber gleiten.

Ein weiterer Vorteil vertiefter Führungsschienen ist, dass man nach Demontage des ersten und zweiten Schlittens 5, 6 von der Grundplatte 4 letztere als eine normale, ungeführte Positionier- und/oder Arbeitsplatte verwenden kann.

Die Erfindung könnte weiterhin derart abgewandelt werden, dass auch der erste, untere Schlitten 5 aus magnetischem oder magnetisierbarem Material besteht. Sodann wäre es möglich, die Magnete 30 des zweiten, oberen Schittens 6 derart anzuordnen, dass sie eine magnetische Verbindung zu dem ersten, unteren Schlitten 5 ausbilden.

In diesem Falle ist es empfehlenswert, auch an dem ersten, unteren Schlitten 5 nach unten gerichtete Magnete anzuordnen, welche mit der darunter liegenden Grundplatte 4 in Kontakt treten und wenigstens einen Magnetschluß zwischen dem ersten, unteren Schlitten 5 und der Grundplatte 4 herstellen.

Als Besonderheit können solche Magnete an der Unterseite des ersten, unteren Schlittens 5 und/oder an der Unterseite des zweiten, oberen Schlittens 6 auch im jeweiligen Zentrum des betreffenden Schlittens 5, 6 angeordnet sein.

Dies ist selbst dann möglich, wenn sich an der Oberseite des darunter liegenden Elements, also der Grundplatte 4 oder des ersten, unteren Schlittens 5, eine über das jeweilige Zentrum hinweg laufende Führungsnut befindet, sofern der Magnet eine größere Breitenerstreckung, insbesondere einen größeren Durchmesser, aufweist als die Breite der betreffenden Führungsnut.

Dabei kann die Anordnung der Führungsnuten auch wie in der Ausführungsform nach Fig. 1 bis 4 gestaltet sein.

Jeweils oberhalb einer Führungsnut angeordnete Magnete müssen gegenüber dortigen Führungsstiften oder Führungsleisten in der jeweiligen Führungsrichtung versetzt sein.

Alternativ dazu könnten ein oder mehrere Magnete selbst als in eine Führungsnut eingreifende Führungsstift(e) oder Führungsleiste(n) ausgebildet sein.

Auch bei dieser Ausführungsform könnten zur Relativverstellung in Richtung der langgestreckten Führungselemente, insbesondere Führungsnuten, auch eine oder mehrere Antriebsspindel(n) vorgesehen sein, die mechanisch, d.h. manuell oder motorisch, angetrieben sein können oder gar in eine Steuerung oder Regelung oder Automatik eingebunden sein können.

Bezugszeichenliste

| | | | |
|---|---|---|---|
| 1 | Vorrichtung | 26 | Rand |
| 2 | Objektträger | 27 | Unterseite |
| 3 | Oberfläche | 28 | Führungsstift |
| 4 | Grundplatte | 29 | Vertiefung |
| 5 | erster Schlitten | 30 | Magnet |
| 6 | zweiter Schlitten | 31 | Längsseite |
| 7 | Unterseite | 32 | Stirnseite |
| 8 | Rand | 33 | Gehäuse |
| 9 | Oberseite | 34 | Oberseite |
| 10 | Führungsnut | 35 | Skalierung |
| 11 | Flanke | 36 | Teilstrich |
| 12 | Grund | 37 | Bohrung |
| 13 | Längenskala | 38 | Aufsatzteil |
| 14 | Teilstrich | 39 | Grundplatte |
| 15 | Unterseite | 40 | Unterseite |
| 16 | Führungsstift | 41 | Oberseite |

(fortgesetzt)

| 17 | Durchgangsausnehmung | 42 | Stift |
|----|----------------------|----|-------|
| 18 | Oberseite | 43 | Block |
| 19 | Führungsnut | | |
| 20 | Flanke | | |
| 21 | Grund | | |
| 22 | Längenskala | | |
| 23 | Teilstrich | | |
| 24 | Schmalseite | | |
| 25 | Rand | | |

**Patentansprüche**

1. Vorrichtung (1) zur variablen und geführten Positionierung eines zu messenden und/oder zu bearbeitenden Objektes oder eines Objektträgers (2), mit einer Grundplatte (4), einem ersten, darauf in einer ersten horizontalen Richtung geführt verfahrbaren, ersten Schlitten (5) und einem auf dem ersten Schlitten (5) in einer zu der ersten Richtung lotrechten, zweiten horizontalen Richtung verfahrbaren, zweiten Schlitten (6),

   a) wobei die Grundplatte (4) wenigstens ein Parallelführungselement für den ersten Schlitten (5) aufweist,
   b) wobei der erste Schlitten (5) auf seiner Oberseite (18) wenigstens ein Parallelführungselement für den zweiten Schlitten (6) aufweist,
   c) wobei sich der zweite Schlitten (6) mittels eines oder mehrerer Füße auf der Grundplatte (4) über wenigstens einen unmittelbaren Kontakt abstützt,

   **dadurch gekennzeichnet, dass**

   d) mindestens ein Parallelführungselement wenigstens ein langgestrecktes Führungselement in Form einer Führungsnut (10, 19) umfasst
   e) und dass die Breite oder der Durchmesser der Füße des zweiten Schlittens (6) zur Abstützung auf der Grundplatte (4) größer ist als die Breite einer Führungsnut (10, 19).

2. Vorrichtung (1) nach Anspruch 1, **dadurch gekennzeichnet, dass** der erste Schlitten (5) und/oder der zweite Schlitten (6) jeweils eine geschlossene Ober- und/oder Unterseite (18,15) ohne fensterartige Ausnehmungen aufweisen, allenfalls unterbrochen von Durchgangsbohrungen (17) bspw. zur Aufnahme von Führungsstiften (16,28) oder -leisten.

3. Vorrichtung (1) nach Anspruch 1 oder 2, **dadurch gekennzeichnet, dass** die Grundplatte (4) sowie der erste Schlitten (5) und der zweite Schlitten (6) aus einem für Licht nicht oder kaum durchdringlichen Material wie Metall bestehen.

4. Vorrichtung (1) nach einem der Ansprüche 1 bis 3, **dadurch gekennzeichnet, dass** wenigstens ein langgestrecktes Führungselement auf der Oberseite (18) des ersten Schlittens (5) angeordnet ist.

5. Vorrichtung (1) nach einem der vorhergehenden Ansprüche, **dadurch gekennzeichnet, dass** mindestens ein Parallelführungselement als in ein langgestrecktes Führungselement eingreifendes oder jenes umgreifendes Element ausgebildet ist , insbesondere als Stift oder Öse oder Leiste, wobei vorzugsweise wenigstens ein mit einem langgestreckten Führungselement zusammenwirkendes Führungselement an der Unterseite (15,27) der ersten oder zweiten Platte (5,6) angeordnet ist.

6. Vorrichtung (1) nach einem der vorhergehenden Ansprüche, **dadurch gekennzeichnet, dass** der zweite Schlitten (6) zwar in eine Führung des darunter liegenden, ersten Schlittens (5) eingreift, dort jedoch keine Abstützung in einer Richtung lotrecht zu seiner Plattenebene erfährt oder erfahren muss.

7. Vorrichtung (1) nach einem der vorhergehenden Ansprüche, **dadurch gekennzeichnet, dass** der zweite Schlitten (6) mittels Unterdruck an der Grundplatte festgesaugt wird, insbesondere indem Füße des zweiten Schlittens (6) an eine Unterdruck-Quelle angeschlossene Öffnungen in der Oberseite der Grundplatte überdecken und dort gestgesaugt werden..

8. Vorrichtung (1) nach Anspruch 7, **dadurch gekennzeichnet, dass** ein, zwei oder mehrere Füße des zweiten Schlittens (6) von je einem Dichtungsring umschlungen werden, so dass die gesamte, von einem solchen Dichtungsring umgriffene Fläche der Untereite des Schlittens (6) an der Grundplatte (4) festgesaugt wird.

9. Vorrichtung (1) nach einem der vorhergehenden Ansprüche, **dadurch gekennzeichnet, dass** der zweite Schlitten (6) an der Grundplatte (4) magnetisch gehalten wird, vorzugsweise indem der zweite Schlitten Magnete, bevorzugt Permanentmagnete, aufweist, vorzugsweise an der jeweiligen Unterseite (15,27), bevorzugt an den Unterseiten von Füßen an dem zweiten Schlitten (6).

10. Vorrichtung (1) nach einem der vorhergehenden Ansprüche, **dadurch gekennzeichnet, dass** die Grundfläche des ersten, unteren Schlittens (5) in zumindest einer Richtung schmäler ist als die Grundfläche des zweiten, oberen Schlittens (6), wobei vorzugsweise die zulässige Verschieberichtung zwischen dem ersten, unteren Schlitten (5) und dem zweiten, oberen Schlitten (6) lotrecht zu derjenigen Richtung orientiert ist, in welcher der erste Schlitten (5) schmäler ist als die Grundfläche des zweiten, oberen Schlittens (6).

11. Vorrichtung (1) nach einem der vorhergehenden Ansprüche, **dadurch gekennzeichnet, dass** sich an der Unterseite (27) des zweiten, oberen Schlittens (6) ein oder mehrere Magnete (30) befinden, welche den ersten, unteren Schlitten (5) oder nur zumindest Bereiche desselben seitlich umgreifen, insbesondere an einer oder beiden von dessen Längsseiten (31), wobei vorzugsweise die Stärke des Überstands der Füße und/oder Magnete (30) über die Unterseite (27) des zweiten Schlittens (6) etwa der Stärke des Korpus des ersten Schlittens (5) entspricht.

12. Vorrichtung (1) nach einem der vorhergehenden Ansprüche, **dadurch gekennzeichnet, dass** sich eine Skala (13) an der Oberseite (9) der Grundplatte (4) und/oder an der Oberseite (18,34) des ersten und/oder zweiten Schlittens (5,6) befindet, insbesondere zwischen zwei langgestreckten Führungselementen, insbesondere parallel zu jenen.

13. Vorrichtung (1) nach einem der vorhergehenden Ansprüche, **dadurch gekennzeichnet, dass** die Grundplatte (4) auf ihrer Oberseite (9) wenigstens eine gerade gestreckte erste Skala (13) aufweist, die sich in einer horizontalen Richtung erstreckt, vorzugsweise parallel zu dem mindestens einem Paralleführungselement (10) an der Grundplatte (4).

14. Vorrichtung (1) nach einem der vorhergehenden Ansprüche, **dadurch gekennzeichnet, dass** der erste Schlitten (5) auf seiner Oberseite (18) wenigstens eine gerade gestreckte zweite Skala (22) aufweist, die sich in einer horizontalen Richtung erstreckt, vorzugsweise parallel zu dem mindestens einem Paralleführungselement (19) an dem ersten Schlitten (5) und/oder rechtwinklig zu der ersten Skala (13) an der Grundplatte (4).

15. Vorrichtung (1) nach einem der vorhergehenden Ansprüche, **dadurch gekennzeichnet, dass** der zweite Schlitten (6) auf seiner Oberseite (34) eine vorzugsweise kreisförmige dritte Skala (35) aufweist oder eine sonstige Einrichtung zur Orientierung und/oder Positionierung eines zu messenden und/oder zu bearbeitenden Objektes oder eines Objektträgers (2).

**Claims**

1. Device (1) for variable and guided positioning of an object to be measured or to be machined or of an object holder (2), comprising a base plate (4), a first carriage (5) guidedly movable thereon in a first horizontal direction, and a second carriage (6) movable on the first carriage (5) in a second horizontal direction orthogonal to the first direction,

   a) wherein the base plate (4) comprises at least one parallel guide element for the first carriage (5),
   b) wherein the first carriage (5) comprises on its upper side (18) at least one parallel guide element for the second carriage (6),
   c) wherein the second carriage (6) is supported by one or more feet on the base plate (4) via at least one direct contact,

   **characterized in that**

d) at least one parallel guide element comprises at least one elongated guiding element in the form of a guiding groove (10, 19),

e) and **in that** the width or the diameter of the feet of the second carriage (6) resting on the base plate (4) is larger than the width of a guiding groove (10, 19).

2. Device (1) according to claim 1, **characterized in that** the first carriage (5) and/or the second carriage (6) comprise a cohesive upper and/or lower side (18,15) without window-like recesses, at most interrupted by through-holes (17) for example for the reception of guiding pins (16,28) or guiding slats.

3. Device (1) according to claim 1 or 2, **characterized in that** the base plate (4) as well as the first carriage (5) and the second carriage (6) consist of a material which is not or hardly permeable for light, like metal.

4. Device (1) according to one of claims 1 to 3, **characterized in that** at least one elongated guiding element is arranged on the upper side (9) of the base plate (4) or on the upper side (18) of the first carriage (5).

5. Device (1) according to one of the preceding claims, **characterized in that** at least one parallel guide element is formed as an element engaging into an elongated guiding element or encompassing that, especially in the form of a pin or an eyelet or a slat, wherein preferably at least one guiding element cooperating with an elongated guiding element is arranged at the lower side (15,27) of the first or second plate (5,6).

6. Device (1) according to one of the preceding claims, **characterized in that** although the second carriage (6) engages into a guiding of the subjacent first carriage (5), it will not experience or does not have to experience any support in a direction orthogonal to the plane of the plate there.

7. Device (1) according to one of the preceding claims, **characterized in that** the second carriage (6) is sucked to the base plate via negative pressure, especially while feet of the second carriage (6) overlap openings in the upper side of the base plate, which are connected to a source of negative pressure, and thereby are sucked there.

8. Device (1) according to claim 7, **characterized in that** one, two or several feet of the second carriage (6) are entwined by a sealing ring each, so that the entire area of the lower side of the carriage (6), which is encompassed by such a sealing ring, is sucked tight to the base plate (4).

9. Device (1) according to one of the preceding claims, **characterized in that** the second carriage (6) is magnetically retained at the base plate (4), preferably while the second carriage comprises magnets, especially permanent magnets, preferred at the regarding lower side (15,27), preferentially at the lower sides of feet at the second carriage (6).

10. Device (1) according to one of the preceding claims, **characterized in that** the area of the first, lower carriage (5) is narrower than the area of the second, upper carriage (6) at least in one direction, wherein preferably the permitted direction of relocation between the first, lower carriage (5) and the second, upper carriage (6) is oriented orthogonally to the direction, in which the first carriage (5) is narrower than the area of the second, upper carriage (6).

11. Device (1) according to one of the preceding claims, **characterized in that** one or several magnets (30) are arranged at the lower side (27) of the second, upper carriage (6), which magnets encompass the first, upper carriage (5) or at least regions thereof laterally, especially at one or both of their long sides (31), wherein preferably the magnitude of the projection of the feet and/or magnets (30) over the lower side (27) of the second carriage (6) approximately corresponds to the thickness of the corpus of the first carriage (5).

12. Device (1) according to one of the preceding claims, **characterized in that** a scale is located at the upper side (9) of the base plate (4) and/or at the upper side (18,34) of the first and/or second carriage (5,6), especially between two elongated guiding elements, particularly parallel to those.

13. Device (1) according to one of the preceding claims, **characterized in that** the base plate (4) comprises at its upper side (9) at least one straight first scale (13) extending in a horizontal direction, preferably parallel to the at least one parallel guide element (10) at the base plate (4).

14. Device (1) according to one of the preceding claims, **characterized in that** the first carriage (5) comprises at its upper side (18) at least one straight second scale (22) extending in a horizontal direction, preferably parallel to the at least one parallel guide element (19) at the first carriage (5) and/or orthogonally to the first scale (13) at the base plate (4).

15. Device (1) according to one of the preceding claims, **characterized in that** the second carriage (6) comprises at its upper side (34) a preferybly circular third scale (35) or another device for aligning or positioning of an object to be measured and/or to be machined, or of an object holder (2).


**Revendications**

1. Dispositif (1) de positionnement variable et guidé d'un objet ou d'un porte-objet (2) à mesurer et/ou à usiner, comportant une plaque de base (4), un premier chariot (5) pouvant y être déplacé de manière guidée dans un premier sens horizontal et un second chariot (6) pouvant être déplacé sur le premier chariot (5) dans un second sens horizontal perpendiculaire au premier sens,

   a) en ce que la plaque de base (4) comporte au moins un élément de guidage parallèle pour le premier chariot (5),
   b) en ce que le premier chariot (5) comporte sur sa face supérieure (18) au moins un élément de guidage parallèle pour le second chariot (6),
   c) en ce que le second chariot (6) s'appuie au moyen d'un ou de plusieurs pieds sur la plaque de base (4) sur au moins un contact direct,

   **caractérisé en ce qu'**

   d) au moins un élément de guidage parallèle comporte au moins un élément de guidage allongé en forme de rainure de guidage (10, 19),
   e) et **en ce que** la largeur ou le diamètre des pieds du second chariot (6) pour l'appui sur la plaque de base (4) est supérieure à la largeur d'une rainure de guidage (10, 19).

2. Dispositif (1) selon la revendication 1, **caractérisé en ce que** le premier chariot (5) et/ou le second chariot (6) comportent respectivement une face supérieure et/ou inférieure (18, 15) fermée sans évidement en forme de fenêtre, tout au plus interrompue par des trous traversants (17) par exemple pour le logement de doigts ou de rails de guidage (16, 28).

3. Dispositif (1) selon la revendication 1 ou 2, **caractérisé en ce que** la plaque de base (4) ainsi que le premier chariot (5) et le second chariot (6) sont constitués d'un matériau non perméable ou peu perméable à la lumière comme le métal.

4. Dispositif (1) selon l'une des revendications 1 à3, **caractérisé en ce qu'**au moins un élément de guidage allongé est disposé sur la face supérieure (18) du premier chariot (5).

5. Dispositif (1) selon l'une des revendications précédentes, **caractérisé en ce qu'**au moins un élément de guidage parallèle est réalisé sous forme d'un élément s'engageant dans un élément de guidage allongé ou l'entourant, en particulier sous forme de goupille, d'œillet ou de rail, **en ce que** de préférence au moins un élément de guidage concourant avec un élément de guidage allongé est disposé sur la face inférieure (15, 27) de la première ou de la seconde plaque (5, 6).

6. Dispositif (1) selon l'une des revendications précédentes, **caractérisé en ce que** le second chariot (6) s'engage certes dans un guidage du premier chariot (5) sous-jacent, mais il n'y est pas supporté ou ne doit pas y être supporté dans un sens perpendiculaireà son plan de plaque.

7. Dispositif (1) selon l'une des revendications précédentes, **caractérisé en ce que** le second chariot (6) adhère à la plaque de base au moyen de vide partiel, en particulier **en ce que** des pieds du second chariot (6) recouvrent des ouvertures raccordées à une source de vide partiel dans la face supérieure de la plaque de base et qu'ils y adhèrent.

8. Dispositif (1) selon la revendication 7, **caractérisé en ce qu'**un, deux ou plusieurs pieds du second chariot (6) sont entourés chacun d'une bague d'étanchéité de sorte que la surface totale, entourée par une telle bague d'étanchéité, de la face inférieure du chariot (6), adhère à la plaque de base (4).

9.  Dispositif (1) selon l'une des revendications précédentes, **caractérisé en ce que** le second chariot (6) est maintenu magnétiquement sur la plaque de base (4), de préférence **en ce que** le second chariot comporte des aimants, en priorité des aimants permanents, de préférence sur la face inférieure (15, 27) respective, en priorité sur les faces inférieures de pieds sur le second chariot (6).

10. Dispositif (1) selon l'une des revendications précédentes, **caractérisé en ce que** la surface de base du premier chariot (5) inférieur est plus étroite tout au moins dans un sens que la surface de base du second chariot (6) supérieur, **en ce que** de préférence le sens de déplacement admissible entre le premier chariot (5) inférieur et le second chariot (6) supérieur est orienté perpendiculairement au sens dans lequel le premier chariot (5) est plus étroit que la surface de base du second chariot (6) supérieur.

11. Dispositif (1) selon l'une des revendications précédentes, **caractérisé en ce qu'**un ou plusieurs aimants (30) se trouvent sur la face inférieure (27) du second chariot (6) supérieur, lesdits aimants entourant latéralement le premier chariot (5) inférieur ou au moins seulement des zones de celui-ci, en particulier sur l'un ou les deux de ses grands côtés (31), **en ce que** de préférence l'épaisseur de la partie saillante des pieds et/ou des aimants (30) au-dessus de la face inférieure (27) du second chariot (6) correspond approximativement à l'épaisseur du corps du premier chariot (5).

12. Dispositif (1) selon l'une des revendicationsprécédentes, **caractérisé en ce qu'**une échelle (13) se trouve sur la face supérieure (9) de la plaque de base (4) et/ou sur la face supérieure (18, 34) du premier et/ou du second chariot (5, 6), en particulier entre deux éléments de guidage allongés, en particulier parallèle à ceux-ci.

13. Dispositif (1) selon l'une des revendications précédentes, caractérisé en ce quela plaque de base (4) comporte sur sa face supérieure (9) au moins une première échelle (13) allongée droite qui s'étend dans un sens horizontal, de préférence parallèle à au moins un élément de guidage parallèle (10) sur la plaque de base (4).

14. Dispositif (1) selon l'une des revendications précédentes, **caractérisé en ce que** le premier chariot (5) comporte sur sa face supérieure (18) au moins une deuxième échelle allongée droite (22) qui s'étend dans un sens horizontal, de préférence parallèle à au moins un élément de guidage parallèle (19) sur le premier chariot (5) et/ou orthogonal par rapport à la première échelle (13) sur la plaque de base (4).

15. Dispositif (1) selon l'une des revendications précédentes, **caractérisé en ce que** le second chariot (6) comporte sur sa face supérieure (34) une troisième échelle de préférence circulaire (35) ou un autre dispositif destiné à l'orientation et/ou au positionnement d'un objet ou d'un porte-objet (2) à mesurer et/ou à usiner.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100250004 A
- WO 2005111690 A2